# EUROPEAN PATENT APPLICATION

(11) **EP 2 193 903 A1**
(43) Date of publication of application: **09.06.2010**
(21) Application number: 08425779.9
(22) Date of filing: 05.12.2008
(51) Int. Cl.: B29B 17/00

(54) **Ecologic panel by thermal cutting and its manufacturing process**

(71) Applicant: Desantis, Alberto, 70029 Santeramo in Colle (IT)
(72) Inventor: Desantis, Alberto, 70029 Santeramo in Colle (IT)
(74) Representative: Russo, Dimitri

(57) **Abstract**

**Summary**

Invention has as an object a panel to be used in building industry, which has specifications of a sound and thermal insulation, whose construction foresees use of ecologic and recyclable materials, suitably mixed with a binding resin up to a percentage of 50%.

Besides its manufacturing process does not requires use of presses and of other very big machinery but only of a mixer and of an injector.

## Description

Present invention is concerned with a new type of an ecologic panel for building industry and its connected manufacturing process.

In details present invention has as an object a panel that besides having characteristics as a sound and thermal insulator, which is common to more general panels, has peculiarity to utilize ecologic and recyclable materials suitably mixed with a binding resin.

Industry of furniture manufacturing and more generally also building industry make to-day a large application of above mentioned product because this panel is efficient, economic and strong.

As well known, above panels can be used either as a cover for prefabricated houses of medium size and small tents or as dividing walls inside sheds, for example in order to get small offices or bathrooms.

A thermal cut panel is made up by an insulating material, usually either an expanded resin which has a function of a binder or by polystyrene, located and pressed between two metallic plates which are facing and parallel one to the other.

Usually these panels are sold with standard widths and thickness but with variable heights according to application as a function of various applications and typologies of building or product; subsequently these panels are cut according to measure and they are bolted or siliconed together.

Applications are various to such an extent that these are also used for manufacture of parts of furniture and other similar craftsmanship applications owing to their low ratio weight/insulation coefficient.

A first inconvenience is caused by fact that present panels are very heavy and it follows that same ones are not suitable to a series of purposes as it is the case in which it is necessary to have available a product whose main characteristic is lightness, as for example for insulating panels to be applied to ceilings.

As already mentioned above, their main application field is building industry: really they are mainly also used as covers of roofs, gutters and large tents that, besides weighing down the whole structure, they make it difficult to install them on the same one.

Besides, when using as insulation not recyclable material, in case structure is demolished, as a rule, these panels are no longer utilized and as a consequence they are thrown away not caring of the whole cycle of a product disposal.

More than once sheets of metallic plate are separated from inside insulating material: while however the first one is melted and used again second one is set on fire, for example it is used as fuel in electrical power plants, with a consequent production of fumes which are very toxic

A further inconvenience of all known thermal cut panels is to be found in their manufacturing process; as a matter of fact, in order to compress and inject insulating material and binding material it is necessary to have available very powerful presses capable to generate very large pressures and as a result very expensive and very big.

As a matter of fact, two sheets of metal plate, plastic, glass fiber or an other suitable material of a suitable thickness are crushed one against the other by very powerful presses by placing between the two sheets insulating material.

However this last one acts a force per square meter which is very big and it opposes to upper and lower walls crushing; it is as a result necessary to over design presses with a heavy increase in costs. In case that panel has complex surface shapes, in order that all parts of material are exactly assembled, pressure to apply could be even greater.

In short, an other inconvenience of known panels is due to fact that same ones can only be built only in the shape of panels, it is a consequence that before their use same ones must be suitably cut and shaped according to particular needs with a big waste of time and of material.

Object of present invention is that to supply a panel for building industry which is ecologic and economical, also keeping thermal and sound specifications equal and even bigger than those of panels now in the market.

A further object is that to design panels which have a lower specific weight: this object is obtained by this invention by means of the use of rejected materials, which are for example, organic city garbage, paper, cardboard, dead branches, wood carpentry shavings, straw, stems, leaves and maize cobs, stems of reeds. Besides plastic materials, as for instance bottles, rejected polystyrene of packing materials, foam rubber and tyres provided they are suitably ground.

A further object is that to supply a panel to be used in anti seismic buildings.

Still an other object, is that to supply a process for the construction of panels that do not need for their construction of either presses or of other complex machinery but only the use of a semi conic hopper which is capable, owing to its shape and to its rotary motion, to inject insulating material at a high pressure inside moulds without using presses.

This process has also advantage to make panels which are ready to be used in very short times, because resin polymerises in maximum three minutes.

Thanks to this system it is possible to make not only panels but also complex objects which have various shapes and thickness allowing to insulating material to use and fill up entire empty space included in mould.

For these purposes, present invention can solve all problems that come from large specific weight of common thermal cut common panels that make them suitable to many kinds of purposes, besides that connected to production, by supplying a manufacturing process that does not require sophisticated equipments for its manufacture.

These above mentioned and further objects are obtained by ecologic panel of the present invention, which is described in the following, in a preferred realization which is not confined to further developments in patent area, with help of enclosed drawing tables which describe following figures:
figure 1 -- a total axonometric view of panel;
figure 2 -- example of an application in series of figure 4 panels on a carrying frame;
figure 3 -- a front axonometric view of a panel with a corrugated shape in order to allow flowing of rain water;
figure 4 -- perspective view of a panel with a strengthened structure;
figure 5 -- cross section of panel of figure 4;
figure 6 -- elementary representation of manufacturing process:

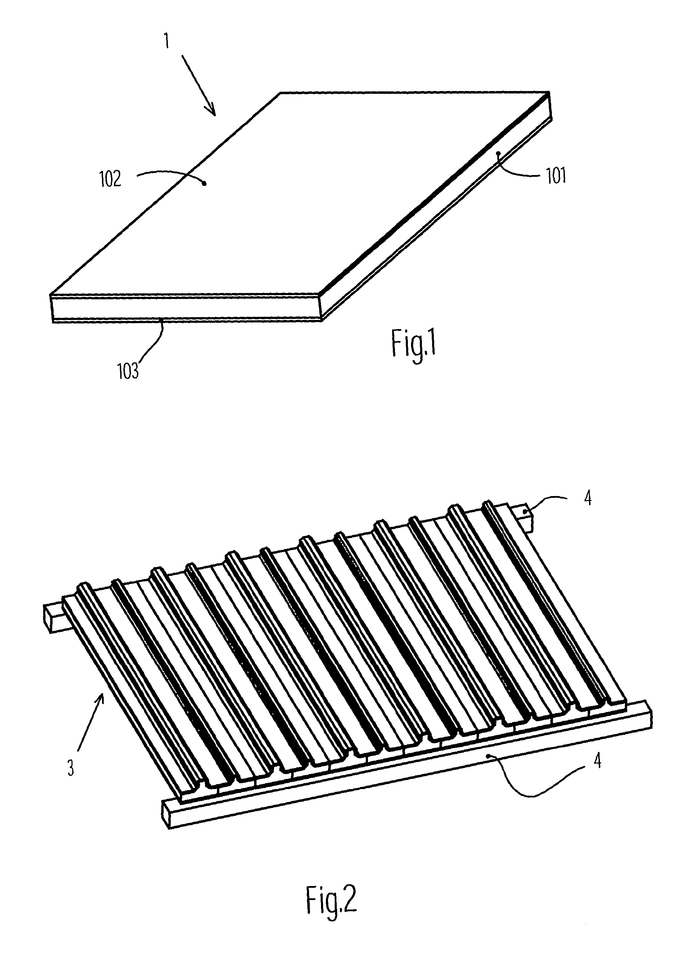

Thermal cutting ecologic panel 1 which is object of present invention and described in a preferred realization in figure 1, is made of an insulating material 101 which is made of a mixture of resin and organic material placed between and pressed by two thin plates 102 and 103.

Insulating material object of this invention is made either of wood shavings or of materials which come from woodland as small trunks, small branches, straw, wood carvings, or from recycling of materials as pallets, old panels and even old furniture in a variable quantity from fifty to eighty per cent and by an expanded resin, which is for example expanded polyurethane, for the remaining percentage.

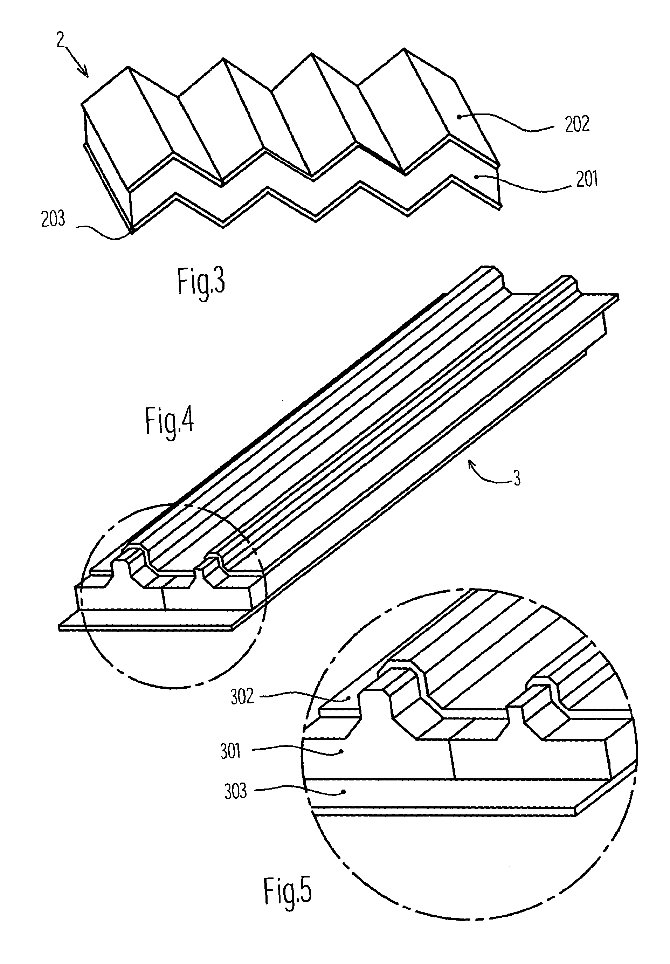

Above mentioned panels, can be shaped according to shapes that are going to increase resistance due to vertical loads, for example due to snow, by simply making swells as it can be seen in figure 4.

Manufacturing process of panel includes injection of above described compound directly in the mould whose shape will be, when polyurethane is hardened, according to manufactured object that it is intention to obtain.

As a matter of fact, as it can be seen in cross section of figure 5, panel 3 has insulation 301 placed between base 303 and surface 302; this last one is mainly a plate sheet, that by means of a process of bending by pressure, it takes desired shape.

In figure 2 thermal cut panels 3 are shown in series supported and bolted together on a supporting chassis which is made of two metallic or wood bars 4 so that same ones can be placed one near the other and siliconed together in order to avoid infiltrations.

A different realization is that described in figure 3 in which panel 2 has both plates 202 and 203 with the shape of a gutter, for roof extension; as a consequence also insulating material 201 which is injected takes the same shape.

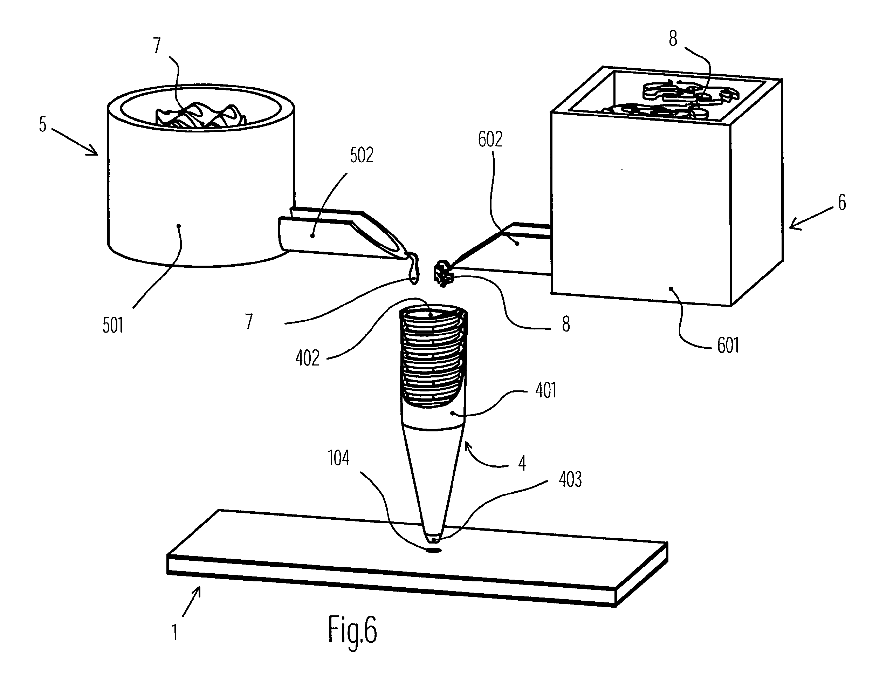

Object of present invention also is the relevant manufacturing process of same thermal cut panels. As already mentioned above, a semi conic hopper made of an external casing 401 that by means of a mouth 403 injects material inside hole 104 which is obtained in panel 1 (fig.6).

Two separated silos 5 and 6, made up by a container 501 and 601, contain respectively resin 7 and reject material 8, which, through two channels 502 and 602 flow by falling material in hopper 4; material, which is mixed, is pushed by an endless screw 402 which is provided by a rotary motion.

As a result an increase of pressure is obtained, from a upper side to a lower one, inside hopper 4 capable of filling up all empty spaces which are to be found in mould which is made by plates of panel 1.

Thermal cut panel and its own manufacturing process which is object of present invention are described with the help of a few examples or of preferred realizations; it is understood that this invention is not only confined by these, on the contrary it is our intention to protect other versions and similar adaptations and executions.

## Claims

1. Thermal cut panel made up by two sheets of plate (202) and (203) which shape the walls of the mould inside which reject material (8) is injected together with a binder (8);

2. Ecologic panel according to claim 1 **characterized by** fact that Plate sheets (202) and (203) can have various shapes and volumes according to strength that it is necessary to give to panel;

3. Ecologic panel according to previous claims **characterized by** fact that reject material has a variable percentage from fifty to eighty per cent and expanded resins the remaining percentage.

4. Ecologic panel according to previous claims **characterized by** fact that reject material is made up by material coming from woodland as small trunks, small branches, straw, wood carvings, or from recycling of materials as pallets, old panels, rags or as an alternative also of any other type of reject material also of plastic or ferrous type.

5. Ecological panel according to previous claims **characterized by** fact that binder used for its execution is made of an expanded resin of any type.

6. Process for manufacturing the ecologic panel **characterized by** fact that, same process includes use of a mould in which it is injected a compound of reject materials and of expanded resins;

7. Process according to claim 6 for manufacturing of an ecologic panel made up by a hopper (4) in which, from above reject material (8) and resin (7) are fed from above crammed in two silos respectively (5) and (6), while from low side through mouth (403) I it is injected mixture in hole (104) of panel (1).

8. Process according to claims 6, 7 and 8 **characterized by** fact that pressing element of material-resin mixture is made of a hopper(4) made up by a cover (403) which has a semi conic shape inside which an endless screw rotates (402);

9. Process according to claims 6, 7, 8, and 9 **characterized by** following phases:
a) Injection of reject components and expanded resin inside empty cavity of panel;
b) Expansion of resin inside panel;
c) Hardening of resin;
d) Extraction of panel in its use shape.

10. Ecologic panel and its manufacturing process according to one or more of previous claims or by all what that can be deduced from enclosed description.
